# EUROPEAN PATENT SPECIFICATION

(11) **EP 1 026 207 B1**
(45) Date of publication and mention of the grant of the patent: **22.02.2006**
(21) Application number: 00810066.1
(22) Date of filing: 25.01.2000
(51) Int. Cl.: C09B 67/48, C09B 67/22

(54) **Pigment particle growth and/or crystal phase directors**
Verbindungen zur Kontrolle des Teilchenwachstums und /oder der Kristallphase von Pigmenten
Composés contrôlant la croissance des particules et/ou de la phase cristalline de pigments

(30) Priority: 02.02.1999 US 118405; 02.02.1999 US 118419
(43) Date of publication of application: 09.08.2000
(73) Proprietor: Ciba Specialty Chemicals Holding Inc., 4057 Basel (CH)
(72) Inventor: Bäbler, Fridolin, Hockessin, DE 19707 (US)

(56) References cited:
- EP-A- 0 362 690
- EP-A- 0 378 509
- EP-A- 0 489 421
- EP-A- 0 538 784
- EP-A- 0 643 110
- EP-A- 0 666 288
- EP-A- 0 790 281
- FR-A- 1 486 752
- US-A- 4 791 204
- US-A- 5 472 494
- US-A- 5 698 618
- PATENT ABSTRACTS OF JAPAN vol. 010, no. 377 (C-392), 16 December 1986 (1986-12-16) -& JP 61 168666 A (DAINIPPON INK & CHEM INC), 30 July 1986 (1986-07-30)

## Description

The present invention relates to novel compounds which can direct and control the growth and/or crystal phase of pigment particles. Such compounds are particularly useful when present during the synthesis of the pigment.

A number of patents describe processes for the direct synthesis of pigments in a pigmentary form to avoid the additional expensive and oftentimes environmentally unfriendly pigment finishing processes (e.g. processes for particle size reduction and/or crystal-form modification). For example E.P. Patent No. 643,110 and U.S. Patent No. 5,424,429 describe a direct synthesis of quinacridone solid solutions and 2,9-dichloroquinacridone in pigmentary form, respectively, in the presence of quinacridone phthalimidomethyl derivatives. E.P. Patent No. 685,530 describes the preparation of a direct synthesis of pigmentary grade dioxazine in the presence of a dioxazine derivative.

It is also known that sulfonic acid derivatives of certain pigments can effectively diminish the crystal growth during the isolation of the pigment from a reaction mixture. Such sulfonic acid derivatives are described, for example, in U.S. Patent No. 3,386,843. Other patents describe the use of sulfonic acid derivatives of pigments to stabilize against recrystallization and change of crystal modification as, for example, in G.B. Patent No. 1,544,839 which is directed to phthalocyanine pigments.

U.S. Patent No. 5,755,873 describes a method for the preparation of quinacridone pigments in which a quinacridone derivative is incorporated during synthesis arid copending provisional application Ser. No. 60/087,773 describes a direct synthesis of pigmentary diketopyrrolopyrrole pigments in the presence of quinacridone or diketopyrrolopyrrole derivatives.

The Japanese Patent No. 061 45 546 describes phthalimidomethyl dihydroquinacridones and the use thereof as pigment dispersants.

Known particle growth inhibitors which are derived from pigment derivatives are often strongly colored and can behave as an impurity.

Based on the state of the art it is unexpected that non planar molecules can act as particle growth inhibitors and crystal phase directors for pigment crystals composed of planar organic pigment molecules.

Although the addition of such known pigment derivatives can be advantageous, pigment synthesis in the presence of such derivatives in many cases does not provide the favored pigmentary crystal size, shape or crystal modification. Therefore many pigments so synthesized may still require finishing steps to obtain pigments with the preferred color characteristics.

The present invention is based on the discovery that new selected pigment derivatives in which a specific aromatic or hetero aromatic group is linked by a methylene group to a pigment molecule are particularly effective for directing and controlling the growth and/or crystal modification of pigment particles when present during the pigment synthesis step.

Such pigment particle growth directors can be prepared by simple synthesis procedures and offer the pigment manufacturer a means to prepare a pigment providing the preferred color characteristic without requiring additional pigment finishing step.

The inventive compounds allow the manufacturer to produce high performance organic pigments in an economical and environmentally friendly manner of producing high performance organic pigments and thus, are of extreme commercial importance.

The present invention relates to novel a compound of formula I

(MO₃S)ₘ¹ - Q¹ - (CH₂- (X¹) - (Y¹)ₙ¹)ₒ¹ (I)

wherein
M represents a metal cation, quaternary N cation or H;
Y¹ is a sulfonic or carboxylic acid or salt thereof;
X¹ is an aromatic group, a cyclo-hetero aliphatic group with at least one 5 atom or 6 atom ring or a hetero aromatic group with at least one 6 atom ring and which is not a phthalimido group;
m¹ and n¹ independently from each other represent an integer from 0 to 2.5;
o¹ is an integer from 0.05 to 4, and
Q¹ represents a 6,13-dihydroquinacridone moiety of formula III: 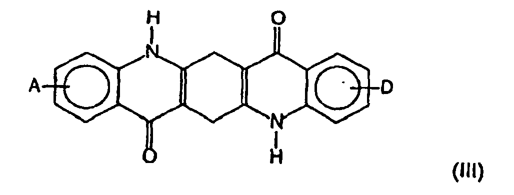
wherein
A and D are independently 1 or 2 substituents selected from H, F, Cl, C₁-C₃alkyl and C₁-C₃alkoxy.

The present invention further relates to a process for the preparation and use of such compounds.

Preferably, m¹ of formula I represents an integer from about zero to 2, most preferably zero to 1; n² represents an integer from about zero to 2, most preferably from about zero to 1.2; and o represents an integer from about 0 to 2, most preferably from about 0 to 1.5.

The metal cation M of formula I is preferably sodium, potassium, calcium, magnesium or aluminum. The quaternary N cation of formula I is an ammonium or an alkyl ammonium group.

Typically, the group X¹ of formula I are an aromatic group selected from a 5 carbon or 6 carbon ring or a polycyclic groups comprising two to six fused 5 carbon and/or 6 carbon rings or a cyclo-hetero aliphatic group comprising at least one 5 or 6 atom ring, or X¹ is fused 5 and/or 6 atom rings, or X¹ is a hetero-aromatic group which is not a phthalimido group comprises a 6 atom ring or fused 5 and/or 6 atom rings, and wherein said hetero-aromatic group contains 1 to 4 hetero atoms selected from N, S and/or O,

Suitable aromatic groups include, for example, phenylene, naphthalene, acenaphthylene, anthracene, phenanthrene, naphthacene, chrysene, pyrene or perylene. Preferably the aromatic group is phenylene, naphthalene, anthracene, phenanthrene, perylene or pyrene, and most preferably the aromatic group is phenylene or naphthalene.

Cyclo-hetero aliphatic groups are, for example, pyrrolidine, imidazolidine, piperidine, piperazine or morpholine and which preferably are barbituric acid.

Appropriate hetero aromatic groups of X¹ are, for instance, pyridine, pyrazine, pyrimidine, pyridazine, isoindole, quinoline, isoquinoline, carbazole, phenothiazine, benzimidazolone, benzothiazole, pyrrolo, imidazole or pyrazole and which said hetero-aromatic groups of X¹ preferably are pyridine, quinoline, pyrrolo, imidazole or pyrazole.

The above exemplified aromatic, cyclohetero aliphatic or hetero aromatic groups can optionally be substituted with one or more halogen, oxy, hydroxy, imino, amino and/or C₁₋C₁₈alkyl or C₁-C₁₈alkoxy groups, preferably C₁-C₃alkyl or C₁-C₃alkoxy groups.

Examples of the large number of such substituted aromatic, cyclohetero aliphatic or hetero aromatic groups are for instance toluene, ortho-, meta- or para-xylene, chlorobenzene, 1- or 2-methylnaphthalene or anthraquinone, barbituric acid, melamine, 1,3,7-trimethylxanthin, hydantoin, 2-methylbenzimidazole, 2,6,8-trihydroxypurine, 1,8-naphtosultam, o-benzoic acid sulfimide or 2,4-dihydroxyprimidine.

Preferably, aromatic groups are toluene, ortho-, meta- or para-xylene, chlorobenzene, 1- or 2-methylnaphthalene or anthraquinone.

Preferably, hetero aromatic groups are melamine, 1,3,7-trimethylxanthin, hydantoin, 2-methylbenzimidazole, 2,6,8-trihydroxypurine, 1,8-naphtosultam, o-benzoic acid sulfimide or 2,4-dihydroxyprimidine.

Commonly the group Y¹ is a carboxylic acid or a sulfonic acid or a free sulfonic acid or a sodium, potassium, magnesium, calcium or aluminum salt thereof, or a quaternary ammonium or alkyl ammonium salt thereof. Most preferably the group Y¹ is a sodium, potassium, magnesium, calcium or aluminum salt thereof.

A further embodiment of the present invention is a process for the preparation of compounds of formula I, wherein:
a) the pigment of the pigment moiety Q¹ is dissolved in concentrated sulfuric acid;
b) the intermediate X¹ is added into the solution and dissolved at a temperature below 50°C;
c) para-formaldehyde is added at a temperature below 50°C;
d) and then is heated to a temperature from to 50 to 100°C;
e) and then isolated.

The pigment moiety Q¹ and the intermediate X¹, a substantial portion of which is the moiety of group X¹, are reacted with formaldehyde in the inventive process.

Preferably the reaction is carried out in concentrated (95-98%) sulfuric acid. In one preferred method, the pigment of the pigment moiety Q¹ is dissolved in concentrated sulfuric acid at a concentration of about 5 to 30 weight percent, most preferably about 10 to 20 weight percent at a temperature below about 50°C, preferably at about 35 to 45°°C. The intermediate X¹ is added to the pigment solution at a temperature below about 50°C, preferably at about 35 to 45°C and is also dissolved. Finally the formaldehyde is added, preferably in the form of para-formaldehyde, at a temperature below about 50°C, preferably at about 35 to 45°C. The reaction mixture is heated to a temperature from to 50 to 100°C and stirred at that temperature until the reaction is complete, preferably for about 30 minutes to 6 hours, most preferably from about 30 to 90 minutes, and drowned into ice water. The slurry is stirred for about 5 minutes to 6 hours, preferably from about 30 minutes to 3 hours, at a temperature from about 0 to 50°C, preferably from about 10 to 25°C. The reaction mixture is drowned into water to provide a precipitate. Then the inventive compounds are then isolated by filtration or centrifugation and are preferably washed with water. The resulting product cake can be dried or can be used in the form of an aqueous cake as an additive during the pigment synthesis.

In general a stochiometric amount of pigment, intermediate X¹ and formaldehyde is used; however an excess of the intermediate X¹ or formaldehyde may be used to achieve the desired product. Preferably, the molar ratio of the pigment: intermediate X¹ formaldehyde is 1 : 1 to 1.2 : 1 to 2.

If a high degree of sulfonation is desired, the reaction mixture is stirred at higher temperature, for example, above 60°C. If it is desirable to have a low degree of sulfonation, the reaction is maintained at lower temperature, for example, below 60°C.

The isolated samples can be analyzed by known methods, for example, by elementary analysis or mass spectrometry such as LCMS, GCMS or the matrix-assisted laser desorption ionization technique (MALDI) or by the HPLC method, all of which are well known to those of ordinary skill in the art. Using the preferred technical preparation method described above, which does not include specific cleaning steps, the purity of the isolated product is generally not 100 % and contains, depending on the starting materials and reaction temperature, some remaining starting materials or other byproducts which, when in a concentration that does not impact the effect of the particle size and crystal phase director, are tolerated and can actually provide additional advantageous effects. By technically well known methods, such as solvent treatments, recrystallization or precipitation from basic polar solvent solutions, for example in basic dimethyl sulfoxide or dimethyl formamide, such products can be further purified, if desired.

Generally, the inventive pigment particle growth and crystal phase director compounds are added at a concentration of about 0.1 to 15 percent, preferably about 0.3 to 10 percent and most preferably about 0.5 to 8 percent, based on the pigment to be synthesized, before or during the final steps of pigment synthesis.

The inventive pigment particle growth and/or crystal phase directors are suitable as additives for the synthesis of pigments of several pigment classes including pigments of the anthraquinone, phthalocyanine, perinone, perylene, diketopyrrolopyrrole, thioindigo, iminoisoindoline, iminoisoindolinone, quinacridone, flavanthrone, dioxazine, indanthrone, anthrapyrimidine and quinophthalone pigment classes. Preferably, but not essentially, the pigment used in the pigment moiety Q¹ of the inventive compounds belongs to the same pigment class as the pigment being synthesized.

6,13-dihydroquinacridones of formula I are particularly suitable for the synthesis of direct pigmentary grade diketo pyrrolopyrrole and quinacridones and/or its solid solutions, Said compounds of formula I are highly suitable for the synthesis of quinacridone pigments in their specific crystal modifications, such as the alpha, beta or gamma quinacridone, 2,9-dichloroquinacridone, 2,9-dimethyl-quinacridone, 4,11-dichloroquinacridone and solid solutions thereof. The inventive pigment particle growth directors are particularly effective when said pigment particle growth directors are completely or partially soluble in the reaction media in which the pigment is being synthesized.

A further embodiment of the present invention concerns a process for the direct synthesis of a pigmentary grade anthraquinone, phthalocyanine, perinone, perylene, diketopyrrolopyrrole, thioindigo, iminoisoindoline, iminoisoindolinone, quinacridone, flavanthrone, dioxazine, indanthrone, anthrapyrimidine or quinophthalone pigment wherein said pigment is synthesized in the presence of 0.1 to 25 weight percent of a pigment particle growth and/or crystal phase director compound of formula I or II of claim 1, based on the weight pigment being synthesized.

Preferably, the process for the direct synthesis of a pigmentary grade quinacridone, quinacridone, 2,9-dichloroquinacridone, 4,11-dichloroquinacridone, 2,9-dimethyl-quinacridone, wherein said pigment or solid solution thereof is synthesized in the presence of 0.1 to 25 weight percent of a pigment particle growth and/or crystal phase director compound of formula I , based on the weight pigment being synthesized.

Further, the present invention concerns a process for the preparation of a pigmentary grade anthraquinone, phthalocyanine, perinone, perylene, diketopyrrolopyrrole, thioindigo, iminoisoindoline, iminoisoindolinone, quinacridone, flavanthrone, dioxazine, indanthrone, anthrapyrimidine and quinophthalone pigment comprising a kneading, solvent or aqueous milling finishing step or a premilling followed by an after treatment step in an organic solvent, preferably concerns a process for the preparation of a pigmentary grade diketopyrrolopyrrole quinacridone or comprising a premilling followed by an after treatment step in an organic solvent, in the presence of 0.1 to 25 weight percent of a 6,13-dihydroquinacridone of formula I, based on the weight of the pigment being finished.

In addition, the present invention concerns a process for the preparation of a direct pigmentary diketopyrrolopyrrole or quinacridone pigment or a solid solution thereof comprising the step of synthesizing said pigment or solid solution in the presence of 0.1 to 25 percent by weight of at least one compound of formula I, or of 0.5 to 8 percent by weight of a 6,13-dihydroquinacridone of formula I, based on the pigment being synthesized.

Without limiting this invention to any particular theory, it is believed that the inventive particle growth director molecule adheres to the synthesized pigment molecule and by doing so directs the crystal growth and crystal phase. The term "directing the crystal growth" refers to controlling the synthesis of pigment particles to have a suitable pigmentary size as well as directing the growth of the crystals to generate particles of a specifically desired shape, such as platelet, needle, cubic, leaflet, prismatic and other geometric forms, in a desired crystal phase. The effect can be influenced by the chemical structure of the organic pigment, the selection of the reaction media and the concentration and chemical structure of the inventive particle growth inhibitor.

Under circumstances in which the reaction media of the pigment to be synthesized is oxidative, the inventive 6,13-dihydroquinacridone derivative may be partially or completely oxidized to the corresponding quinacridone derivative during the pigment synthesis. Therefore, the inventive 6,13-dihydroquinacridone derivatives are particularly useful for the quinacridone pigment synthesis when the quinacridone pigment is obtained by the oxidation of the corresponding 6,13-dihydroquinacridone as described, for example, in U.S. Patent No. 5,840,901.

During the isolation of the pigment, for example in the filtration step, these compounds - when soluble in the reaction media - can be washed out and if desirable, be recollected from the filtrate or wash liquid. Typically, these compounds are partially left on the pigment surface and can have additional benefits. Such benefits are, for example, improved pigment properties such as rheological properties, dispersibility and wetting behavior, flocculation resistance and improved heat stability.

Additionally, it has been found that phthalimidomethyl dihydroquinacridone, previously described as a pigment dispersant, can be an effective pigment particle growth controller and pigment crystal phase director.

In certain cases, it is advantageous to use the inventive compounds in mixture or in combination with other additives including known pigment particle growth inhibitors such as, for example, phthalimidomethyl-, imidazolmethyl- or pyrazolmethyl-quinacridone, pigment sulfonic acids or specific polymers; or other optional ingredients such as wetting agents, surfactants, defoamers, antioxidants, UV absorbers, light stabilizers, plastisizers, or general texture improving agents and so forth. Any such additional additives may be used as long as said additives are stable under the pigment synthesis conditions and have no negative impact on the final pigment properties or the environment. Generally such additives can be used in a concentration from about 0.1 to 25 percent, preferably from about 0.2 to 15 percent and most preferably from about 0.5 to 8 percent, based on the pigment to be synthesized. The resulting pigment/additive mixture can be used in any conventional pigment application, such as in the formation of paints, inks, color filters, fibers, paper and textiles.

Suitable polymers are, for example, polyacrylic acid, polymethacrylic acid, polymaleic anhydride, polyurethane, polyvinylether, polyvinylalcohol, polyalkylene glycol, polyethylene oxide, cellulose derivatives, polyimine, polyvinylpyridine, or copolymers such as copolymers of acrylic acid with styrene, acrylonitrile, vinylacetate, vinylphosphonate, vinylpropionate, vinylchloride, itaconic acid or maleic anhydride, or a mixture thereof, or polymeric derivatives like ethoxylated or propoxylated fatty amines such as ethoxylated cocoalkyl, oleyl or soyaalkyl amines; ethoxylated or propoxylated fatty quaternary salts such as ethoxylated cocoalkyltrimethyl ammonium chloride; ethoxylated fatty amides such as ethoxylated oleamides; alkyl-, cycloalkyl- or alkylaryl-oxypoly (ethylen-oxy)ethanol, cycloalkyloxypoly(ethylenoxy)laurate or oleate, polyethylene glycol 400 laurate or oleate, alkyl-, cycloalkyl- or alkylaryl-poly(ethylenoxy)carboxylate or phosphonate.

Suitable surfactants include anionic surfactants such as alkylbenzene- or alkylnaphthalene-sulphonates, alkylsulfosuccinates or naphthalene formaldehyde sulfonates; cationic surfactants including, for example, quaternary salts such as benzyl tributyl ammonium chloride; or nonionic or amphoteric surfactants such as polyoxyethylene surfactants and alkyl- or amidopropyl betaines, respectively

Suitable texture improving agents are, for example, fatty acids such as stearic acid or behenic acid, and fatty amines such as laurylamine and stearylamine. In addition, fatty alcohols or ethoxylated fatty alcohols, polyols such as aliphatic 1,2-diols or epoxidized soy bean oil, waxes, resin acids and resin acid salts may be used for this purpose.

Suitable UV stabilizers are, for example, the known benzotriazol derivatives known under the trade name TINUVIN or CIBA Fast H Liquid an aryl sulfonated benzotriazol, both being products of CIBA Specialty Chemicals Corporation.

Due to the ability to act as an antiflocculant as well as an excellent particle growth inhibitor and phase director, the inventive compounds can generally be used in the pigment finishing, pigment treatment, or pigment application such as an additive during the pigment dispersion step in bead mills, extruder, calander and so forth, as well as during pigment synthesis. Also, the inventive compounds are themselves strongly colored and can be used as coloring agents, for example in the paints, inks, color filters, plastics, fibers, and in the paper or textile industry.

The present invention concerns the use of compounds of formula I or II to enhance heat stability, rheological and flocculant properties of pigments particles.

Further, the present invention concerns a method of improving the heat stability, rheological and flocculant properties of pigment particles, said method comprising adding to said pigment particles at least one compound of claim 1 in an amount sufficient to reduce flocculation or improve the heat stability.

Pigment finishing processes in which the inventive 6,13-dihydroquinacridone derivatives can be used are for example the known kneading, solvent or aqueous milling processes.

Additionally, many of the inventive compounds provide physical properties that are similar to those of pigments; specifically low solubility in organic solvents or the application media. Therefore, said compounds are non-bleeding and, for example, will not migrate into food when a pigment composition containing the inventive compound is used as a coloring agent in food packaging materials.

Particularly effective are the inventive 6,13-dihydroquinacridone derivatives when present in pigment finishing processes in which a pigment crude is premilled and after treated in an organic solvent, a process as described for example in the US patents Nr. 5,194,088 and 2,857,400.

The said 6,13-dihydroquinacridone derivatives are particularly suited for pigments of various pigment classes having different shades because they themselves are only slightly colored and therefore, the presence of the inventive compounds does not lower the saturation or change the hue of the pigment.

Furthermore, the present 6,13-dihydroquinacridones derivatives are non planar molecules. Based on the state of the art it is unexpected that non planar molecules can act as particle growth inhibitors and crystal phase directors for pigment crystals composed of planar organic pigment molecules.

In the examples, all parts are by weight unless otherwise indicated.

### Example 1 outside the scope of the claimed invention

A one liter flask equipped with a stirrer, thermometer, condenser and drying tube was charged with 200 ml concentrated (95 - 98%) sulfuric acid. 46.8 grams (0.15 mol) MONASTRAL Red Y RT-759-D, an unsubstituted quinacridone pigment of CIBA Specialty Chemicals Corporation were added at a temperature below 45°C and the mixture was stirred for 20 minutes at 40 - 45°C, to completely dissolve the pigment.

26.4 grams (0.15 mol) benzene sulfonic acid (90%) were added at a temperature below 45°C and the mixture was stirred for 20 minutes at 40 to 45°C, followed by the rapid addition of 4.8 grams (0.16 mol) para formaldehyde. The reaction mixture was stirred for one hour at 55 - 60°C, then poured into 2.5 liter ice water. The precipitate was stirred for 2 ½ hours at room temperature, then filtered. The press cake was washed with water to a pH of 5 and dried yielding a product in which acidbenzene sulfonic acid methyl quinacridone with the molecular weight of 482 was detected by MALDI.

### Example 2 outside the scope of the claimed invention

A one liter flask equipped with a stirrer, thermometer, condenser and drying tube was charged with 200 ml concentrated (95 - 98%) sulfuric acid. 31.2 grams (0.1 mol) MONASTRAL Red Y RT-759-D were added at a temperature below 45°C and the mixture was stirred for 20 minutes at 40 - 45°C to completely dissolve the pigment.

41.4 grams (0.1 mol) naphthalin-1- sulfonic acid (50 %) were added at a temperature below 45°C and the mixture was stirred for 20 minutes at 40 to 45°C followed by the rapid addition of 3.2 grams (0.107 mol) para formaldehyde. The reaction mixture was stirred for one hour at 55 - 60 °C then poured into 2.5 liter ice water. The precipitate was stirred for 2 ½ hours at room temperature, then filtered. The press cake was washed with water to a pH of 2.8 and kept as presscake. A small sample was further washed to a pH of 5 and dried yielding a product in which naphthalin-1- sulfonic acid methyl quinacridone having a molecular weight of 532 was detected by MALDI.

### Example 3 outside the scope of the claimed invention

The procedure of Example 2 was repeated using 0.1 mol naphthalin-2 sulfonic acid instead of naphthalin-1-sulfonic acid to yield a product in which naphthalin-2- sulfonic acid methyl quinacridone having a molecular weight of 532 was detected by MALDI.

### Example 4 outside the scope of the claimed invention

The procedure of Example 2 was repeated using 0.1 mol anthraquinone-2 sulfonic acid instead of naphthalin-1-sulfonic acid, yielding a product in which anthraquinone sulfonic acid methyl quinacridone having a molecular weight of 614 was detected by MALDI.

### Example 5 outside the scope of the claimed invention

The procedure of Example 2 was repeated using 18.4 grams (0.1 mol) o-benzoic acid sulfimide sodium salt instead of naphthalin-1-sulfonic acid, yielding a product in which o-benzoic acid sulfimide methyl quinacridone having a molecular weight of 507 was detected by MALDI.

### Example 6 outside the scope of the claimed invention

The procedure of Example 2 was repeated using 20.4 grams (0.1 mol) Naxonate ST, a commercially available sodium toluene sulfonate from Ruetgers-Naese (sodium toluene sulfonate with a content of 93 %) instead of naphthalin-1-sulfonic acid, yielding a product in which toluene sulfonic acid methyl quinacridone having a molecular weight of 496 was detected by MALDI.

### Example 7 outside the scope of the claimed invention

A one liter flask equipped with a stirrer, thermometer, condenser and drying tube was charged with 200 ml concentrated (95 - 98%) sulfuric acid. 28.8 grams IRGAZIN DPP Scarlet EK (0.1 mol of a commercial 3,6-diphenyl -1,4-diketopyrrol-[3,4-c]-pyrrole pigment from CIBA Specialty Chemicals Corp.) were added at a temperature of 40 - 45°C and the mixture was stirred for 20 minutes at 40 - 45°C to completely dissolve the pigment.

18.4 grams (0.1 mol) o-benzoic acid sulfimide sodium salt were added at a temperature below 45°C and the mixture was stirred for 20 minutes at 40 to 45°C followed by the rapid addition of 3.2 grams (0.107 mol) para formaldehyde. The reaction mixture was stirred for 50 minutes at 45 - 50 °C then poured into 2.5 liter ice water. The precipitate was stirred for 1 ½ hours at room temperature, then filtered. The press cake was washed with water neutral and dried yielding a red brown product in which o-benzoic acid sulfimide methyl 3,6-diphenyl -1,4-diketopyrrol-[3,4-c]-pyrrole having a molecular weight of 483 was detected by MALDI.

### Example 8

A one liter flask equipped with a thermometer, stirrer and condenser was charged with 40 grams 6,13-dihydroquinacridone, 180 ml methanol and 40.9 grams 50% aqueous sodium hydroxide. The mixture was stirred under a slow flow of nitrogen at 30 - 45 °C for five minutes. 2.4 grams of the pigment additive prepared according to Example 4, followed by 0.5 grams anthraquinone mono sulfonic acid sodium salt as catalyst, were added and the reaction mixture was heated to reflux for one hour generating the sodium salt of 6,13-dihydroquinacridone. 73.5 grams of an aqueous 16.9% hydrogen peroxide solution were added into the reaction mixture with a peristaltic pump at a rate of 0.3ml/minute while maintaining reflux under a slow nitrogen flow. The resulting reddish suspension was further stirred for 10 minutes at reflux then diluted with 100 ml cold water and filtered. The presscake was washed with hot water then dried, yielding 38.9 grams red quinacridone.

The product showed a purity of above 98% quinacridone as determined by a spectrophotometric method. The x-ray diffraction pattern of the pigment shows the characteristics of an alpha quinacridone. A microscopic view of the pigment shows crystals having a length of 1 to 6 µm and a width of 0.2 to 0.6 µm. When incorporated into plastics or paints the pigment imparted a bright yellowish red color with excellent properties.

### Example 9

A one liter flask equipped with a thermometer, stirrer and condenser was charged with 45 grams 2,9-dichloro-6,13-dihydroquinacridone, 3.0 grams of the pigment additive prepared according to Example 1
, 280 ml methanol and 136.8 grams 45 % aqueous potassium hydroxide, which was stirred for 5 minutes at 30 to 40°C. The mixture was then stirred under a slow flow of nitrogen at reflux temperature for one hour generating the potassium salt of 2,9-dichloro-6,13-dihydroquinacridone. 0.6 grams of the sodium salt of anthraquinone-2-sulfonic acid was added. 67.8 grams of an aqueous 16.9 % hydrogen peroxide solution were added at a pump setting of 0.3 ml/ minute while maintaining reflux under a slow nitrogen flow over a period of 3 hours 20 minutes. The resulting magenta colored suspension was further stirred for 10 minutes at reflux temperature, diluted with 100 ml cold water, then filtered at 50-60°C. The presscake was washed with hot water then dried yielding 44 grams of magenta-colored 2,9-dichloroquinacridone pigment.

The x-ray diffraction pattern of the pigment showed the characteristics of a gamma 2,9-dichloroquinacridone. When incorporated in automotive paints the product produced a strong transparent magenta color dispersion with excellent rheological properties, and which can be easily sprayed on metallic panels generating coatings of excellent durability.

### Example 10

The procedure described in Example 9 was repeated using 1.8 grams, instead of 3.0 grams, of the pigment additive prepared according to Example 1, and 80 grams 50 % sodium hydroxide instead of potassium hydroxide, yielding a strong magenta colored 2,9-dichloroquinacridone.

Incorporated in plastics the product produced a strong bluish magenta color with an excellent heat and light stability.

### Example 11

A one liter flask equipped with a thermometer, stirrer and condenser was charged with 40 grams 6,13-dihydroquinacridone, 180 ml methanol and 42 grams 50 % aqueous sodium hydroxide and 14.6 grams of the aqueous presscake of the naphthalin-1- sulfonic acid methyl quinacridone pigment additive prepared according to Example 2. The mixture was stirred under a slow flow of nitrogen at 50 - 55°C for one hour. 0.5 gram anthraquinone mono sulfonic acid sodium salt as catalyst were added and the reaction mixture was heated to reflux for one hour generating the sodium salt of 6,13-dihydro-quinacridone. 67 grams of an aqueous 19.3% hydrogen peroxide solution were added into the reaction mixture with a peristaltic pump at a pumping rate of 0.3 ml/minute, whereby after ½ hour addition time 1.2 grams phthalimidomethyl-quinacridone were introduced into the reaction mixture followed by continuing the hydrogen peroxide addition while maintaining reflux and a slow nitrogen flow. The resulting violet suspension was further stirred for 10 minutes at reflux then diluted with 100 ml cold water and filtered. The presscake was washed with hot water then dried, yielding 38.9 grams violet quinacridone.

The product shows a high purity and only 0.3% remaining 6,13-dihydro-quinacridone as determined by a spectrophotometric method. The x-ray diffraction pattern of the pigment shows the characteristics of a beta quinacridone properties.

### Example 12

A one liter flask equipped with a thermometer, stirrer and condenser was charged with 50 grams 6,13-dihydroquinacridone, 310 ml methanol and 66 grams 50 % aqueous sodium hydroxide and 3.8 grams 50 % aqueous benzyl tributyl ammonium chlorid solution and stirred for 5 minutes at 35 - 40 °C. 0.9 grams anthraquinone sulfonic acid methyl quinacridone pigment additive prepared according to Example 4 was added followed by the addition of 0.5 grams anthraquinone mono sulfonic acid sodium salt as catalyst. The mixture was stirred under a slow flow of nitrogen and heated to reflux. 91.4 grams of an aqueous 17 % hydrogen 67 grams of an aqueous 19.3 % hydrogenperoxide solution were added into the reaction mixture with a peristaltic pump at a pumping rate of 0.3 ml/minute, sulfonic acid, sodium salt, was added. 66 grams of an aqueous 17 % hydrogen peroxide solution were then added at a pump setting of 0.3 ml/ minute while maintaining reflux under a slow nitrogen flow over 3 hours 20 minutes. The resulting red suspension was further stirred for 10 minutes at reflux temperature, then diluted with 100 ml cold water and filtered. The presscake was washed with hot water then dried, yielding 48.9 grams red quinacridone.

The x-ray diffraction pattern of the pigment shows the characteristics of a gamma-III quinacridone which is described in US Pat. No. 5,223,624. It can be easily incorporated in paints and plastics providing strongly red colored articles.

### Example 13

Under a flow of nitrogen a one liter flask equipped with a thermometer, stirrer and condenser is charged with 100 ml tert.-amyl alcohol, 34.6 grams potassium tert. butylate and 144.4 grams of benzonitrile, and the mixture is heated to about 98 °C. A substantially anhydrous solution of 14.6 grams of dimethyl succinate in 10 ml tert. amyl alcohol is added at 98-99 °C in 145 minutes using a metering pump and methanol is distilled of. After the complete addition the reaction mixture is stirred for 2 hours at 99 °C and 0.5 grams o-benzoic acid sulfimide methyl 3,6-diphenyl -1,4-diketopyrrol-[3,4-c]-pyrrole additive prepared according to Example 8 pigment.
are added, then cooled to 65 °C, diluted with 100 ml methanol followed by the addition of 250 ml water. The mixture is filtered. The presscake is washed neutral with water and dried, yielding 19 grams of a scarlet direct pigmentary diketopyrrolopyrrole pigment showing a high color strength, high saturation and good light stability when incorporated in paints and plastics.

### Example 14A

A beta quinacridone crude with a particle size of 2 to 6 µm as for example obtained by the oxidation of 6,13-dihydroquinacridone with hydrogen peroxide as the oxidant as described in US patent Nr. 5,840,901 is premilled according to the following procedure:

A 1-SDG Attritor ™ mill manufactured by Union Process, Inc. Akron, Ohio, which is fitted with L-arms and contains 3.78 liters of 0.6 cm diameter ceramic grinding media with 7.5 MOH hardness, 60-65 Rockwell 45 N hardness, 3.0 kg/cm impact strength and 8500 kg/cm compressive strength. The mill is charged with 350 grams of the beta quinacridone crude and the pigment is milled under a nitrogen flow at a rotation speed of 500 RPM for 50 minutes. At the conclusion of the milling cycle, the product is recovered by opening the valve at the bottom of the mill while rotation continues for 15 minutes yielding a brown highly aggregated powder with a very low crystallinity.

### Example 14B

A one liter flask equipped with a thermometer, stirrer and condenser was charged with 0.3 grams of the o-benzoic acid sulfimide methyl quinacridone additive prepared according to Example 5 and 250 ml DMF (dimethylformamide). The mixture was stirred at 50 -55 °C for 15 minutes whereby the additive was partially dissolved in the solvent. 30 grams of the above premilled powder from Example 14A is added and the suspension was stirred for 3 hours at 50 -55 °C. The resulting violet suspension was filtered. The press cake was washed with water and dried yielding a violet pigment which shows excellent durability and a high chroma when incorporated in paints and plastics. The X-ray diffraction pattern shows the characteristic of a beta quinacridone.

### Example 15

63.0 grams of polyvinylchloride, 3.0 grams epoxidized soy bean oil, 2.0 grams of barium/cadmium heat stabilizer, 32.0 grams dioctyl phthalate and 1.0 gram of the beta quinacridone prepared according to Example 11 were mixed together in a glass beaker using a stirring rod. The mixture was formed into a soft PVC sheet with a thickness of about 0.4 mm by rolling for 8 minutes on a two roll laboratory mill at a temperature of 160° C, a roller speed of 25 rpm and friction of 1:1.2 by constant folding, removal and feeding. The resulting soft PVC sheet was colored in an attractive violet shade with excellent fastness to heat, light and migration.

### Example 16

Five grams of the magenta 2,9-dichloroquinacridone pigment prepared according to Example 10, 2.5 grams hindered amine light stabilizer, 1.0 gram benzotriazole UV absorber, 1.0 gram hindered phenol antioxidant and 1.0 gram phosphite process stabilizer were mixed together with 1000 grams of high density polyethylene at a speed of 175-200 rpm for 30 seconds after flux. The fluxed, pigmented resin was chopped up while warm and malleable, and then fed through a granulator. The resulting granules were molded in an injection molder with a 5 minute dwell time and a 30 second cycle time at temperatures of 260°C. Homogeneously colored chips which show a bright magenta color with excellent light stability were obtained.

### Example 17/Preparation of Automotive Paint

### millbase formulation:

A pint jar was charged with 66 grams acrylic resin, 14.5 grams AB dispersant and 58.1 grams solvent (SOLVESSO 100 from American Chemical). 26.4 grams quinacridone pigment obtained according to Example 12 and 980 grams of 4 mm diameter steel diagonal rods were added. The mixture was milled in the jar for 64 hours on a roller mill. The resulting millbase contained 16.0 % pigment with a pigment/binder ratio of 0.5 and a total non-volatile content of 48.0 %.

### masstone color:

47.3 grams of the above millbase, 36.4 grams of clear solids color solution containing a melamine resin catalyst, non-aqueous dispersion resin and a UV absorber, and 16.3 grams of a balanced clear solid color solution containing a polyester urethane resin were mixed and diluted with a solvent mixture containing 76 parts xylene, 21 parts butanol and 3 parts methanol to a spray viscosity of 20 - 22 seconds, as measured by a #2 Fisher Cup.

The resulting red resin/pigment dispersion was sprayed onto a panel twice at 1.5 minute intervals as a basecoat. After 2 minutes, clearcoat resin was sprayed twice at 1 1/2 minute intervals onto the basecoat. The sprayed panel was then flashed with air in a flash cabinet for 10 minutes and then "baked" in an oven at 265° F (129° C) for 30 minutes, yielding a high chroma red colored panel, with excellent weatherability.

### Example 18

1000 grams of polypropylene granules (DAPLEN PT-55®, from Chemie Linz) and 10 grams of the 2,9-dichloroquinacridone pigment obtained in Example 9 were thoroughly mixed in a mixing drum. The granules so obtained were melt spun at 260-285° C to magenta colored filaments of good light fastness and textile fibers properties.

### Example 19

A one liter flask equipped with a stirrer, thermometer, condenser and drying tube was charged with 200 ml concentrated (95 - 98 %) sulfuric acid. 23.6 grams (0.075 mol) 6,13-dihydroquinacridone were added at a temperature below 45°C and the resulting solution was heated to 100°C and stirred for 6 hours at 100°C, then poured into 2.5 liters of ice water. The precipitate was stirred for 30 minutes at room temperature, then filtered. The presscake was then washed with water to a pH of 5 and dried yielding a product in which 6,13-dihydroquinacridone sulfonic acid with the molecular weight of 394 was detected by MALDI.

### Example 20

A one liter flask equipped with a stirrer, thermometer, condenser and drying tube was charged with 200 ml concentrated (95 - 98%) sulfuric acid. 47.1 grams (0.15 mol) 6,13-dihydroquinacridone were added at a temperature below 45°C and the mixture was stirred for 10 minutes at 40 to 45°C, dissolving the 6,13-dihydro-quinacridone completely.

23.2 grams (0.158 mol) phthalimide were added at a temperature below 45°C and the mixture was stirred for 10 minutes at 40 to 45°C followed by the rapid addition of 4.9 grams (0.163 mol) of para formaldehyde. The reaction mixture was stirred for one hour at 55 - 60°C then poured into 2.5 liters of ice water. The precipitate was stirred for 2 ½ hours at room temperature, then filtered. The presscake was washed with water to a pH of 6 to 7 and dried yielding a product in which phthalimide methyl 6,13-dihydroquinacridone having a molecular weight of 473 was detected by MALDI.

### Example 21

The procedure of Example 20 was repeated using 19.2 grams (0.15 mol) barbituric acid instead of phthalimide to yield a product in which barbituric acid methyl 6,13-dihydroquinacridone having a molecular weight of 454 was detected by MALDI.

### Example 22

The procedure of Example 20 was repeated using 18.9 grams (0.15 mol) melamine instead of phthalimide to yield a product in which melamine methyl 6,13-dihydro quinacridone having a molecular weight of 452 was detected by MALDI.

### Example 23

The procedure of Example 20 was repeated using 27.6 grams (0.15 mol) o-benzoic acid sulfimide sodium salt instead of phthalimide to yield a product in which o-benzoic acid sulfimide methyl 6,13-dihydro quinacridone having a molecular weight of 509 was detected by MALDI.

### Example 24

The procedure of Example 2 was repeated using 26.4 grams benzene sulfonic acid (0.15 mol with a content of 90 %) instead of phthalimide to yield a product in which para benzene sulfonic acid methyl 6,13-dihydro quinacridone having a molecular weight of 486 was detected by MALDI.

### Example 25

The procedure of Example 21 was repeated using 30.6 grams Naxonate ST, a commercially available sodium toluene sulfonate from Ruetgers-Naese (0.15 mol sodium toluene sulfonate with a content of 93 %) instead of phthalimide to yield a product in which toluene sulfonic acid methyl 6,13-dihydro quinacridone having a molecular weight of 500 was detected by MALDI.

### Example 26

A one liter flask equipped with a thermometer, stirrer and condenser was charged with 40 grams 6,13-dihydroquinacridone, 250 ml methanol, 52.8 grams 50 % aqueous sodium hydroxide and 3.0 grams 50 % aqueous benzyl tributyl ammonium chloride. The mixture was stirred under a slow flow of nitrogen at 30 to 45°C for five minutes, heated to 50 to 55°C and stirred at 50 to 55°C for one hour. 0.6 grams of pigment additive melamine methyl dihydroquinacridone prepared according to Example 22 was added, followed by the addition of 0.5 grams anthraquinone mono sulfonic acid sodium salt, as catalyst, and the reaction mixture was heated to reflux. 73 grams of an aqueous 17 % hydrogen peroxide solution were added into the reaction mixture with a peristaltic pump at a setting of 0.3 ml/minute maintaining reflux under a slow nitrogen flow. The resulting reddish suspension was further stirred for 10 minutes at reflux then diluted with 100 ml cold water and filtered. The presscake was washed with hot water then dried, yielding 38.9 grams red quinacridone.

The product showed a purity of above 98 % quinacridone as determined by a spectrophotometric method. The x-ray diffraction pattern of the pigment shows the characteristics of a gamma type quinacridone. When incorporated into plastics or paints the pigment imparts a red color with excellent properties.

### Example 27

The procedure of Example 26 was repeated using 0.6 grams dihydroquinacridone sulfonic acid additive prepared according to Example 1 instead of 0.6 grams melamine methyl dihydroquinacridone to yield 39 grams bluish red quinacridone.

The product showed a purity of above 99 % quinacridone as determined by a spectrophotometric method. The x-ray diffraction pattern of the pigment shows the characteristics of a beta quinacridone. When incorporated into plastics or paints the pigment imparts a violet reddish color with excellent properties.

### Example 28

A one liter flask equipped with a thermometer, stirrer and condenser was charged with 40 grams 6,13-dihydroquinacridone, 180 ml methanol, 42.5 grams 50 % aqueous sodium hydroxide and 14.6 grams of an aqueous presscake containing 1.6 grams naphthalin-1-sulfonic acid methyl quinacridone pigment additive prepared according to Example 2 The mixture was stirred under a slow flow of nitrogen at 50 to 55°C for one hour. 0.5 grams anthraquinone mono sulfonic acid sodium salt, as catalyst, were added and the reaction mixture was heated to reflux. 67 grams of an aqueous 19.3 % hydrogen peroxide solution were added into the reaction mixture with a peristaltic pump at a pumping rate of 0.3 ml/minute, whereby after 15 minutes addition time, 1.2 grams phthalimidomethyl dihydroquinacridone obtained according to Example 20 were added into the reaction mixture followed by another addition of 0.8 grams phthalimidomethyl dihydroquinacridone after 45 minutes while continuously adding the hydrogen peroxide by maintaining reflux and a slow nitrogen flow. The resulting violet suspension was further stirred for 10 minutes at reflux then diluted with 100 ml cold water and filtered. The presscake was washed with hot water, then dried, yielding 38.9 grams violet quinacridone.

The product showed a high purity and only 0.7 % 6,13-dihydroquinacridone left as determined by a spectrophotometric method. The x-ray diffraction pattern of the pigment showed the characteristics of a beta quinacridone. The specific surface area determined by the BET method was 50 m²/g.

When incorporated into automotive paints the product produced a strong violet color dispersion with excellent rheological properties and displayed a semitransparent appearance when drawn on a contrast carton, and which could be easily sprayed on metallic panels generating violet coatings of excellent durability.

### Example 29

A one liter flask equipped with a thermometer, stirrer and condenser was charged with 116.6 grams 45 % aqueous potassium hydroxide, 200 ml methanol and 0.8 grams of the phthalimidomethyl dihydroquinacridone additive prepared according to Example 20. The mixture was stirred for 5 minutes at 30 to 40°C. 45 grams 2,9-dichloro-6,13-dihydroquinacridone were added followed by 60 ml methanol and the resulting suspension was stirred under a slow flow of nitrogen at reflux temperature for one hour to generate the potassium salt of 2,9-dichloro-6,13-dihydroquinacridone. 0.6 gram of anthraquinone-2-sulfonic acid, sodium salt, was added. 68 grams of an aqueous 16.9 % hydrogen peroxide solution were then added at a pump setting of 0.3 ml/ minute while maintaining reflux under a slow nitrogen flow over 3 hours 20 minutes. The resulting magenta colored suspension was further stirred for 10 minutes at reflux temperature, diluted with 100 ml cold water, then filtered at 50 to 60°C. The presscake was washed with hot water and dried yielding 44 grams of magenta-colored 2,9-dichloroquinacridone pigment.

The x-ray diffraction pattern of the pigment showed the characteristics of a gamma 2,9-dichloroquinacridone. The specific surface area as determined by the BET method was 45.2 m²/g. Incorporated in automotive paints the product produced a strong magenta color dispersion with excellent rheological properties, and which was easily sprayed on metallic panels to generate magenta colored coatings of excellent durability.

### Example 30

A one liter flask equipped with a thermometer, stirrer and condenser was charged with 40 grams 6,13-dihydroquinacridone, 185 ml methanol, 42 grams 50 % aqueous sodium hydroxide and 1.2 grams of the barbituric acid methyl dihydro-quinacridone additive prepared according to Example 21. The mixture was stirred under a slow flow of nitrogen at 50 to 55°C for one hour. 0.5 gram anthraquinone mono sulfonic acid sodium salt, as catalyst, was added and the reaction mixture was heated to reflux. 67 grams of an aqueous 19.3 % hydrogen peroxide solution were added into the reaction mixture with a peristaltic pump at a pumping rate of 0.3 ml/minute while maintaining reflux and a slow nitrogen flow. The resulting violet suspension was further stirred for 10 minutes at reflux, then diluted with 100 ml cold water and filtered. The presscake was washed with hot water then dried, yielding 38.9 grams violet reddish quinacridone.

The product showed a high purity and only 0.1 % 6,13-dihydroquinacridone left as determined by a spectrophotometric method. The x-ray diffraction pattern of the pigment showed the characteristics of a beta quinacridone. The specific surface area determined by the BET method was 8 m²/g.

When incorporated into automotive paints the product produced a strong violet reddish color dispersion with excellent rheological properties, displayed an opaque appearance when drawn on a contrast carton, and was easily sprayed on metallic panels to generate violet reddish coatings of excellent durability.

### Example 31

A one liter flask equipped with a thermometer, stirrer and condenser was charged with 45 grams 2,9-dichloro-6,13-dihydroquinacridone, 136.8 grams 45 % aqueous potassium hydroxide, 280 ml methanol, 0.3 gram of the o-benzoic acid sulfimide methyl dihydroquinacridone additive prepared according to Example 23 and 3.4 grams 50 % aqueous benzyl tributyl ammonium chlorid solution. The mixture was stirred for 5 minutes at 30 to 40°C, then heated to reflux and stirred under a slow flow of nitrogen at reflux temperature for one hour to generate the potassium salt of 2,9-dichloro-6,13-dihydroquinacridone. 0.6 gram of anthraquinone-2-sulfonic acid, sodium salt, was added. 66 grams of an aqueous 17 % hydrogen peroxide solution were then added at a pump setting of 0.3 ml/ minute while maintaining reflux under a slow nitrogen flow over 3 hours 20 minutes. The resulting magenta colored suspension was further stirred for 10 minutes at reflux temperature, diluted with 100 ml cold water, then filtered at 50 to 60°C. The presscake was washed with hot water and dried yielding 44 grams of magenta-colored 2,9-dichloroquinacridone pigment.

The x-ray diffraction pattern of the pigment showed the characteristics of a gamma 2,9-dichloroquinacridone. The specific surface area as determined by the BET method was 20 m²/g. Incorporated in automotive paints the product produced a strong magenta color dispersion with excellent rheological properties, and which was easily sprayed on metallic panels to generate magenta colored coatings of high opacity and excellent durability.

### Example 32

A beta quinacridone crude with a particle size of 2 to 6 µm as for example obtained by the oxidation of 6,13-dihydroquinacridone with hydrogen peroxide as the oxidant as described in US patent Nr. 5,840,901 is premilled according to the following procedure:

A 1-SDG Attritor ™ mill manufactured by Union Process, Inc. Akron, Ohio, which is fitted with L-arms and contains 3.78 liters of 0.6 cm diameter ceramic grinding media with 7.5 MOH hardness, 60-65 Rockwell 45 N hardness, 3.0 kg/cm impact strength and 8500 kg/cm compressive strength. The mill is charged with 350 grams of the beta quinacridone crude and the pigment is milled under a nitrogen flow at a rotation speed of 500 RPM for 50 minutes. At the conclusion of the milling cycle, the product is recovered by opening the valve at the bottom of the mill while rotation continues for 15 minutes yielding a brown highly aggregated powder with a very low crystallinity.

### Example 33

A one liter flask equipped with a thermometer, stirrer and condenser was charged with 0.3 grams of the o-benzoic acid sulfimide methyl dihydroquinacridone additive prepared according to Example 23 and 250 ml DMF (dimethylformamide). The mixture was stirred at 50 -55 °C for 15 minutes whereby the additive was partially dissolved in the solvent. 30 grams of the above premilled powder is added and the suspension was stirred for 3 hours at 50 -55 °C. The resulting violet suspension was filtered. The press cake was washed with water and dried yielding a violet pigment which shows excellent durability and a high chroma when incorporated in paints and plastics. The X-ray diffraction pattern shows the characteristic of a beta quinacridone.

### Example 34A

The procedure of Example 32 was repeated using instead of a beta quinacridone a 3,6-diphenyl -1,4-diketopyrrol-[3,4-c]-pyrrole crude yielding a brownish highly aggregated powder with a very low crystallinity.

### Example 34B

A one liter flask equipped with a thermometer, stirrer and condenser was charged with 0.5 grams of the toluene sulfenic acid methyl dihydroquinacridone additive prepared according to Example 25 and 230 ml DMSO (dimethylsulfoxide). The mixture was stirred at 50 -55 °C for 15 minutes whereby the additive was partially dissolved in the solvent. 20 grams of the premilled powder prepared according to Example 34A was added and the suspension was stirred for 2 hours at 23-25 °C. The resulting red suspension was filtered. The press cake was washed with water and dried yielding a scarlet pigment which shows a high color strength, high opacity as well as excellent durability and a high chroma when incorporated in paints and plastics.

### Example 35A

The procedure of Example 32 is repeated using instead of a beta quinacridone a perylene-3,4,9,10-tetracarbonic acid diimide yielding a dark highly aggregated powder with a very low crystallinity.

### Example 35B

A one liter flask equipped with a thermometer, stirrer and condenser was charged with 0.2 grams of the benzene sulfenic acid methyl dihydroquinacridone additive prepared according to Example 25 and 250 ml DMSO (dimethylsulfoxide). The mixture was stirred at 50 -55 °C for 15 minutes whereby the additive was partially dissolved in the solvent. 20 grams of the premilled powder prepared according to Example 35A were added and the suspension was stirred for 3 hours at 80-90 °C. The resulting violet suspension was filtered. The press cake was washed with water and dried yielding a violet pigment which shows a high color strength, excellent durability and a high transparency when incorporated in paints.

### Example 36

Under a flow of nitrogen a one liter flask equipped with a thermometer, stirrer and condenser is charged with 100 ml tert.-amyl alcohol, 34.6 grams potassium tert. butylate and 144.4 grams of benzonitrile, and the mixture is heated to about 98 °C. A substantially anhydrous solution of 14.6 grams of dimethyl succinate in 10 ml tert. amyl alcohol is added at 98-99 °C in 145 minutes using a metering pump and methanol is distilled of. After the complete addition the reaction mixture is stirred for 2 hours at 99 °C and 0.5 grams benzene sulfenic acid methyl dihydroquinacridone additive prepared according to Example 24 are added, then cooled to 65 °C, diluted with 100 ml methanol followed by the addition of 250 ml water. The mixture is filtered. The presscake is washed neutral with water and dried, yielding 19 grams of a scarlet direct pigmentary diketopyrrolopyrrole pigment showing a high color strength, high saturation and good light stability when incorporated in paints and plastics.

### Example 37

63.0 grams of polyvinylchloride, 3.0 grams epoxidized soya bean oil, 2.0 grams of barium/cadmium heat stabilizer, 32.0 grams dioctyl phthalate and 1.0 gram of the beta quinacridone prepared according to Example 28 were mixed together in a glass beaker using a stirring rod. The mixture was formed into a soft PVC sheet with a thickness of about 0.4 mm by rolling for 8 minutes on a two roll laboratory mill at a temperature of 160° C, a roller speed of 25 rpm and friction of 1:1.2 by constant folding, removal and feeding. The resulting soft PVC sheet was colored in an attractive violet shade with excellent fastness to heat, light and migration.

### Example 38

Five grams of the magenta 2,9-dichloroquinacridone pigment prepared according to Example 31, 2.5 grams hindered amine light stabilizer, 1.0 gram benzotriazole UV absorber, 1.0 gram hindered phenol antioxidant and 1.0 gram phosphite process stabilizer were mixed together with 1000 grams of high density polyethylene at a speed of 175-200 rpm for 30 seconds after flux. The fluxed, pigmented resin was chopped up while warm and malleable, and then fed through a granulator. The resulting granules were molded in an injection molder with a 5 minute dwell time and a 30 second cycle time at temperatures of 260°C. Homogeneously colored chips which show a bright magenta color with excellent light stability were obtained.

### Example 39 - Preparation of Automotive Paint

### millbase formulation:

A pint jar was charged with 66 grams acrylic resin, 14.5 grams AB dispersant and 58.1 grams solvent (SOLVESSO 100 from American Chemical). 26.4 grams quinacridone pigment obtained according to Example 31 and 980 grams of 4 mm diameter steel diagonal rods were added. The mixture was milled in the jar for 64 hours on a roller mill. The resulting millbase contained 16.0 % pigment with a pigment/binder ratio of 0.5 and a total non-volatile content of 48.0 %.

### masstone color:

47.3 grams of the above millbase, 36.4 grams of clear solids color solution containing a melamine resin catalyst, non-aqueous dispersion resin and a UV absorber, and 16.3 grams of a balanced clear solid color solution containing a polyester urethane resin were mixed and diluted with a solvent mixture containing 76 parts xylene, 21 parts butanol and 3 parts methanol to a spray viscosity of 20 - 22 seconds, as measured by a #2 Fisher Cup.

The resulting violet resin/pigment dispersion was sprayed onto a panel twice at 1.5 minute intervals as a basecoat. After 2 minutes, clearcoat resin was sprayed twice at 1 1/2 minute intervals onto the basecoat. The sprayed panel was then flashed with air in a flash cabinet for 10 minutes and then "baked" in an oven at 265° F (129° C) for 30 minutes, yielding a violet reddish colored panel, with excellent weatherability.

### Example 40

1000 grams of polypropylene granules (DAPLEN PT-55®, from Chemie Linz) and 10 grams of the 2,9-dichloroquinacridone pigment obtained in Example 29 were thoroughly mixed in a mixing drum. The granules so obtained were melt spun at 260-285° C to magenta colored filaments of good light fastness and textile fibers properties.

## Claims

1. A compound of formula I
(MO₃S)ₘ¹ - Q¹ - (CH₂ - (X¹) - (Y¹)ₙ¹)ₒ¹ (I)
wherein
M represents a metal cation, quaternary N cation or H;
Y¹ is a sulfonic or carboxylic acid or salt thereof;
X¹ is an aromatic group, a cyclo-hetero aliphatic group with at least one 5 atom or 6 atom ring or a hetero aromatic group with at least one 6 atom ring and which is not a phthalimido group;
m¹ and n¹ independently from each other represent an integer from 0 to 2.5;
o¹ is an integer from 0.05 to 4; and
Q¹ represents a 6,13-dihydroquinacridone moiety of formula III: 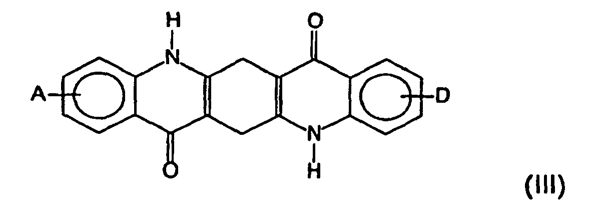
wherein
A and D are independently 1 or 2 substituents selected from H, F, Cl, C₁-C₃alkyl and C₁-C₃alkoxy.

2. The compound of claim 1, wherein X¹ is an aromatic group selected from a 5 carbon or 6 carbon ring or a polycyclic groups comprising two to six fused 5 carbon and/or 6 carbon rings or a cyclo-hetero aliphatic group comprising at least one 5 or 6 atom ring, or X¹ is a hetero-aromatic group which is not a phthalimido group comprises a 6 atom ring or fused 5 and/or 6 atom rings, and wherein said hetero-aromatic group contains 1 to 4 hetero atoms selected from N, S and/or O.

3. The compound of claim 2, wherein X¹ is derived from toluene, ortho-, meta- or para-xylene, chlorobenzene, 1- or 2-methylnaphthalene or anthraquinone, barbituric acid, melamine, 1,3,7-trimethylxanthin, hydantoin, 2-methylbenzimidazole, 2,6,8- 2,6,8-trihydroxypurine, 1,8-naphtosultam, o-benzoic acid sulfimide or 2,4-dihydroxyprimidine.

4. The compound of claim 1, wherein m¹ in formula I represents an integer from zero to 0.5 and preferably zero to 0.1, n¹ represents an integer from zero to 2 and preferably from zero to 1.2, and o¹ represents an integer from 0.1 to 2 and preferably from 0.2 to 1.5.

5. The compound of claim 1, which is phthalimide methyl 6,13-dihydroquinacridone, barbituric acid methyl 6,13-dihydroquinacridone, melamine methyl 6,13-dihydroquinacridone, o-benzoic acid sulfimide methyl 6,13-dihydroquinacridone, p-benzene sulfonic acid methyl 6,13-dihydroquinacridone, or toluene sulfonic acid methyl 6,13-dihydroquinacridone.

6. A process for the preparation of compounds of formula I of claim 1, wherein:
a) the pigment of the pigment moiety Q¹ is dissolved in concentrated sulfuric acid;
b) the intermediate X¹ is added into the solution and dissolved at a temperature below 50°C;
c) para-formaldehyde is added at a temperature below 50°C;
d) and then is heated to a temperature from 50 to 100 °C;
e) and then isolated.

7. A process for the direct synthesis of a pigment selected from the group consisting of anthraquinone, phthalocyanine, perinone, perylene, diketopyrrolopyrrole, thioindigo, iminoisoindoline, iminoisoindolinone, quinacridone, flavanthrone, dioxazine, indanthrone, anthrapyrimidine and quinophthalone wherein said pigment or solid solution thereof is synthesized in the presence of 0.1 to 25 weight percent of a pigment particle growth and/or crystal phase director compound of claim 1, based on the weight pigment being synthesized.

8. The process of claim 7, wherein said pigment is diketopyrrolopyrrole or quinacridone.

9. A method of improving the heat stability, rheological and flocculant properties of pigments particles, said method comprising adding to said pigment particles at least one compound of claim 1 in an amount sufficient to reduce flocculation or improve the heat stability.

10. Use of compounds of formula I of claim 1 to enhance heat stability, rheological and flocculant properties of pigments particles.

## Patentansprüche

1. Verbindung der Formel I,
(MO₃S)ₘ¹ - Q¹ - (CH₂ - (X¹) - (Y¹)ₙ¹)ₒ¹ (I),
worin
M ein Metallkation, ein quartäres N-Kation oder H darstellt;
Y¹ eine Sulfon- oder Carbonsäure oder ein Salz davon ist;
X¹ eine aromatische Gruppe, eine cyclo-heteroaliphatische Gruppe mit mindestens einem 5-Atom- oder 6-Atomring oder eine heteroaromatische Gruppe mit mindestens einem 6-Atomring, und die keine Phthalimidogruppe ist;
m¹ und n¹ unabhängig voneinander eine ganze Zahl von 0 bis 2,5 darstellen;
o¹ eine ganze Zahl von 0,05 bis 4 ist und
Q¹ eine 6,13-Dihydrochinacridoneinheit der Formel III: 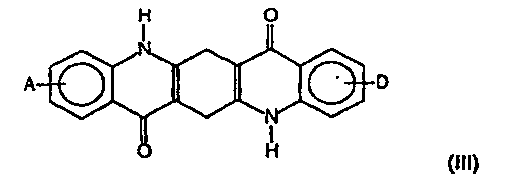
darstellt, worin
A und D unabhängig 1 oder 2 Substituenten, ausgewählt aus H, F, Cl, C₁-C₃-Alkyl und C₁₋C₃-Alkoxy sind.

2. Verbindung nach Anspruch 1, worin X¹ eine aromatische Gruppe, ausgewählt aus einem 5-Kohlenstoff- oder 6-Kohlenstoffring, oder eine polycyclische Gruppe, die zwei bis sechs kondensierte 5-Kohlenstoff- und/oder 6-Kohlenstoffringe umfaßt, oder eine cyclo-heteroaliphatische Gruppe, die mindestens einen 5- oder 6-Atomring umfaßt, ist, oder X¹ eine heteroaromatische Gruppe ist, die keine Phthalimidogruppe ist, die einen 6-Atomring oder kondensierte 5- und/oder 6-Atomringe umfaßt, und worin die hetero-aromatische Gruppe 1 bis 4 Heteroatome enthält, ausgewählt aus N, S und/oder O.

3. Verbindung nach Anspruch 2, worin X¹ von Toluol, ortho-, meta- oder para-Xylol, Chlorbenzol, 1- oder 2-Methylnaphthalin oder Anthrachinon, Barbitursäure, Melamin, 1,3,7-Trimethylxanthin, Hydantoin, 2-Methylbenzimidazol, 2,6,8-Trihydroxypurin, 1,8-Naphtosultam, o-Benzoesäuresulfimid oder 2,4-Dihydroxyprimidin abgeleitet ist.

4. Verbindung nach Anspruch 1, worin m¹ in Formel I eine ganze Zahl von null bis 0,5 und bevorzugt null bis 0,1 darstellt; n¹ eine ganze Zahl von null bis 2 und bevorzugt null bis 1,2 darstellt und o¹ eine ganze Zahl von 0,1 bis 2 und bevorzugt 0,2 bis 1,5 darstellt.

5. Verbindung nach Anspruch 1, die Phthalimidmethyl-6,13-dihydrochinacridon, Barbitursäuremethyl-6,13-dihydrochinacridon, Melaminmethyl-6,13-dihydrochinacridon, o-Benzoesäuresulfimidmethyl-6,13-dihydrochinacridon, p-Benzolsulfonsäuremethyl-6,13-dihydrochinacridon oder Toluolsulfonsäuremethyl-6,13-dihydrochinacridon ist.

6. Verfahren zur Herstellung von Verbindungen der Formel I nach Anspruch 1, worin:
a) das Pigment der Pigmenteinheit Q¹ in konzentrierter Schwefelsäure gelöst wird;
b) das Zwischenprodukt X¹ in die Lösung gegeben und bei einer Temperatur unter 50 °C gelöst wird;
c) para-Formaldehyd bei einer Temperatur unter 50 °C zugegeben wird;
d) und dann auf eine Temperatur von 50 bis 100 °C erwärmt wird;
e) und dann isoliert wird.

7. Verfahren zur direkten Synthese eines Pigments, ausgewählt aus der Gruppe, bestehend aus Anthrachinon, Phthalocyanin, Perinon, Perylen, Diketopyrrolopyrrol, Thioindigo, Iminoisoindolin, Iminoisoindolinon, Chinacridon, Flavanthron, Dioxazin, Indanthron, Anthrapyrimidin und Chinophthalon, worin das Pigment oder die Feststofflösung davon in Gegenwart von 0,1 bis 25 Gew.-% einer Pigmentteilchenwachstums- und/oder-kristallphasendirektorverbindung nach Anspruch 1, bezogen auf das Gewicht des synthetisierten Pigments, synthetisiert wird.

8. Verfahren nach Anspruch 7, wobei das Pigment Diketopyrrolopyrrol oder Chinacridon ist.

9. Verfahren zur Verbesserung der Wärmestabilität, der rheologischen und Ausflockungseigenschaften von Pigmentteilchen, wobei das Verfahren die Zugabe mindestens einer Verbindung nach Anspruch 1 in einer Menge, die ausreicht, um die Ausflockung zu verringern oder die Wärmestabilität zu verbessern, zu den Pigmentteilchen umfaßt.

10. Verwendung von Verbindungen der Formel I nach Anspruch 1 zur Verbesserung der Wärmestabilität, der rheologischen und Ausflockungseigenschaften von Pigmentteilchen.

## Revendications

1. Composé de formule I :
(MO₃S)ₘ¹-Q¹-(CH₂-(X¹)-(Y¹)ₙ¹)ₒ¹ (I)
dans laquelle
- M représente un cation métallique, un cation N quaternaire ou un atome d'hydrogène ;
- Y¹ représente un acide carboxylique ou sulfonique ou un sel de ceux-ci ;
- X¹ représente un groupe aromatique, un groupe cyclohétéroaliphatique comportant au moins un cycle de 5 ou 6 atomes ou un groupe hétéroaromatique comportant au moins un cycle de 6 atomes et qui n'est pas un groupe phtalimido ;
- m¹ et n¹ représentent, indépendamment l'un de l'autre, un nombre entier valant de 0 à 2,5 ;
o¹ représente un nombre entier valant de 0,05 à 4 ; et
- Q¹ représente une fraction de 6,13-dihydroquinacridone de formule III : 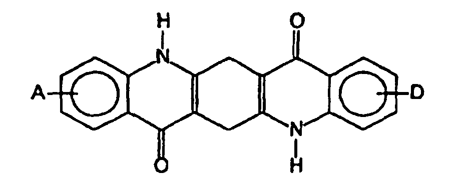
dans laquelle
A et D représentent, indépendamment l'un de l'autre, 1 ou 2 substituants choisis parmi un atome d'hydrogène, de fluor, de chlore, un groupe alkyle en C₁ à C₃ et un groupe alcoxy en C₁ à C₃.

2. Composé selon la revendication 1, dans lequel X¹ représente un groupe aromatique choisi parmi un cycle comportant 5 ou 6 atomes de carbones ou un groupe polycyclique comprenant deux à six cycles de 5 et/ou 6 atomes de carbone condensés ou un groupe cyclohétéroaliphatique comprenant au moins un cycle de 5 ou 6 atomes, ou X¹ représente un groupe hétéroaromatique, qui n'est pas un groupe phtalimido, comprenant un cycle de 6 atomes ou des cycles de 5 et/ou 6 atomes de carbone condensés, et dans lequel ledit groupe hétéroaromatique contient 1 à 4 hétéroatomes choisis parmi un atome d'azote, de soufre et/ou d'oxygène.

3. Composé selon la revendication 2, dans lequel X¹ est un dérivé de toluène, d'ortho-, méta- ou paraxylène, de chlorobenzène, de 1- ou 2-méthylnaphtalène ou anthraquinone, d'acide barbiturique, de mélamine, de 1,3,7-triméthylxanthine, d'hydantoïne, de 2-méthylbenzimidazole, de 2,6,8-2,6,8-trihydroxypurine, de 1,8-naphtosultame, de sulfimide d'acide o-benzoïque ou de 2,4-dihydroxyprimidine.

4. Composé selon la revendication 1, dans lequel m¹ de la formule I représente un nombre entier valant de 0 à 0,5 et de préférence de 0 à 0,1, n¹ représente un nombre entier valant de 0 à 2 et de préférence de 0 à 1,2, et o¹ représente un nombre entier valant de 0,1 à 2 et de préférence de 0,2 à 1,5.

5. Composé selon la revendication 1, qui est la méthyl-6,13-dihydroquinacridone de phtalimide, la méthyl-6,13-dihydroquinacridone d'acide barbiturique, la méthyl-6,13-dihydroquinacridone de mélamine, la méthyl-6,13-dihydroquinacridone de sulfimide d'acide o-benzoïque, la méthyl-6,13-dihydroquinacridone d'acide p-benzènesulfonique ou la méthyl-6,13-dihydroquinacridone d'acide toluènesulfonique.

6. Procédé de préparation des composés de formule I selon la revendication 1, dans lequel :
a) le pigment de la fraction pigmentaire Q¹ est dissous dans de l'acide sulfurique concentré ;
b) l'intermédiaire X¹ est ajouté dans la solution et dissous à une température inférieure à 50°C ;
c) du para-formaldéhyde est ajouté à une température inférieure à 50°C ;
d) puis la solution est chauffée jusqu'à une température allant de 50 à 100°C ;
e) le composé est ensuite isolé.

7. Procédé de synthèse directe d'un pigment choisi parmi le groupe constitué par l'anthraquinone, la phtalocyanine, la périnone, le pérylène, la dicétopyrrolopyrrole, le thioindigo, l'iminoisoindoline, l'iminoisoindolinone, la quinacridone, la flavanthrone, la dioxazine, l'indanthrone, l'anthrapyrimidine et la quinophtalone, dans lequel ledit pigment ou une solution solide de celui-ci est synthétisé en présence de 0,1% à 25% en poids d'un composé directeur de phase cristalline et/ou de croissance de particules pigmentaires selon la revendication 1, par rapport au poids du pigment synthétisé.

8. Procédé selon la revendication 7, dans lequel ledit pigment est la dicétopyrrolopyrrole ou la quinacridone.

9. Procédé d'amélioration de la stabilité à la chaleur et des propriétés rhéologiques et de floculation de particules pigmentaires, ledit procédé comprenant les étapes consistant à ajouter aux dites particules pigmentaires au moins un composé selon la revendication 1 en quantité suffisante pour réduire la floculation ou améliorer la stabilité à la chaleur.

10. Utilisation des composés de formule I selon la revendication 1 pour améliorer la stabilité à la chaleur et les propriétés rhéologiques et de floculation de particules pigmentaires.
